Europäisches Patentamt

European Patent Office

Office européen des brevets

(11) Veröffentlichungsnummer: **0 132 820**
**B1**

(12) **EUROPÄISCHE PATENTSCHRIFT**

(45) Veröffentlichungstag der Patentschrift:
**01.06.88**

(51) Int. Cl.4: **C 01 B 17/90**

(21) Anmeldenummer: **84108668.9**

(22) Anmeldetag: **23.07.84**

(54) Verfahren zur Aufarbeitung metallsulfathaltiger Schwefelsäuren.

(30) Priorität: **02.08.83 DE 3327770**

(43) Veröffentlichungstag der Anmeldung:
**13.02.85 Patentblatt 85/7**

(45) Bekanntmachung des Hinweises auf die Patenterteilung:
**01.06.88 Patentblatt 88/22**

(84) Benannte Vertragsstaaten:
**BE DE FR GB IT NL**

(56) Entgegenhaltungen:
**DE - A - 2 630 363**
**DE - A - 2 729 756**
**DE - A - 3 215 935**

(73) Patentinhaber: BAYER AG, Konzernverwaltung RP
Patentabteilung, D-5090 Leverkusen 1 Bayerwerk (DE)

(72) Erfinder: **Lailach, Günter, Dr., Bodelschwinghstrasse 23,
D-4150 Krefeld (DE)**
Erfinder: **Gerken, Rudolf, Dr., Rather Strasse 79,
D-4150 Krefeld (DE)**
Erfinder: **Müller, Wolfgang-Dieter, Dr.,
Bodelschwinghstrasse 19, D-4150 Krefeld (DE)**
Erfinder: **Brändle, Karl, Dr., Waldstrasse 15,
D-5060 Bergisch Gladbach 2 (DE)**

**Beschreibung**

Die vorliegende Erfindung betrifft ein Verfahren zur Aufarbeitung metallsulfathaltiger Schwefelsäuren, sogenannter Dünnsäuren, durch Eindampfen, gegebenenfalls Ausschleusen eines Teils der Metallsulfate, Abtrennen einer wiederverwendbaren Schwefelsäure und Beseitigung der restlichen Metallsulfate. Die Erfindung betrifft ferner die Verwendung der mit CaO, Ca(OH)$_2$ und/oder CaCO$_3$ umgesetzten Metallsulfate.

Metallsulfathaltige Schwefelsäuren, auch Dünnsäuren genannt, fallen unter anderem bei der TiO$_2$-Produktion und in Beizereien an.

Es ist bekannt, Dünnsäuren durch Umsetzung mit Kalk zu entsorgen. Dabei setzen sich der gefällte Gips und die Metallcarbonate oder -hydroxide nur langsam ab, weshalb zur Durchführung dieses Verfahrens grosse Klärbecken erforderlich sind. Das weitgehend feststofffreie Abwasser enthält immer noch eine Sulfatfracht von etwa 1000 mg SO$_4^{2-}$/l. Bei der Umsetzung der gesamten Schwefelsäure und Metallsulfate aus einer TiO$_2$-Produktion fallen nach diesem Verfahren sehr grosse Gipsmengen an, für die im allgemeinen keine Verwendungsmöglichkeiten bestehen und deren Deponie problematisch ist. Die Verwendung wird ausserdem durch den Wassergehalt dieser Feststoffe erschwert.

Dass auch die Deponie dieser Feststoffe wegen der enormen Mengen zum Problem wird, ist daraus ersichtlich, dass bei einer TiO$_2$-Produktion von 50 000 t/a aus Ilmenit etwa 200 000 t/a Gips und etwa 30 000 t/a Metallcarbonate und -hydroxide anfallen. Der CaCO$_3$-Verbrauch liegt bei 120 000 t/a.

Es ist weiterhin bekannt, aus Dünnsäuren das Eisensulfat als FeSO$_4 \cdot 7$ H$_2$O (Grünsalz) abzutrennen. Nach der Grünsalzabtrennung werden die Dünnsäuren auf 50 bis 70% H$_2$SO$_4$ eingedampft. Das dabei ausgeschiedene FeSO$_4 \cdot$ H$_2$O wird abgetrennt und in den frischen Dünnsäuren gelöst, um als Grünsalz abgetrennt zu werden. Die Probleme des Verfahrens liegen darin, dass für die Abtrennung und schadlose Entsorgung der anderen in Dünnsäuren enthaltenen Metallsulfate keine Lösung vorgeschlagen wird und dass für die anfallenden Mengen Grünsalz, im obigen Beispiel ca. 95 000 t/a, im allgemeinen keine ausreichenden Verwendungsmöglichkeiten bestehen. Die Deponie von Grünsalz ist aber ökologisch bedenklicher als die von Gips und schwerlöslichen Metallverbindungen entsprechend obengenannter Verfahren.

Bei der Berechnung der anfallenden Nebenprodukte in obigen Beispielen wurde jeweils davon ausgegangen, dass in der zur Hydrolyse gelangenden Lösung das Gewichtsverhältnis FeSO$_4$:TiO$_2$ = 1 ist. Je nach TiO$_2$-Rohstoff müssen aus der Aufschlusslösung bereits bis zu 60 000 t/a Grünsalz vor der Hydrolyse abgetrennt werden, um das oben geforderte Verhältnis zu gewährleisten.

Das ökologisch günstigste Verfahren gemäss der gleichzeitig eingereichten Patentanmeldung EP-A-84 108 666 besteht darin, Dünnsäure unter Ausnutzung von minderwertiger Prozesswärme so weit einzudampfen, dass Grünsalz abgetrennt werden kann. Danach wird die verbleibende Dünnsäure auf 62 bis 70% H$_2$SO$_4$ (salzfrei) eingedampft. Nach geeigneter Kristallisation und Abtrennung der enthaltenen Sulfate wird die Säure in den Prozess zurückgeführt, und die Sulfate nebst anhaftender Säure werden thermisch gespalten. Die dabei anfallenden Metalloxide können in der Zementindustrie eingesetzt oder deponiert werden. Der Nachteil des Verfahrens besteht lediglich darin, dass die thermische Spaltung, die Reinigung der Spaltgase und die Umsetzung des SO$_2$ zu Schwefelsäure eine sehr aufwendige und kapitalintensive Anlage erfordern, deren Errichtung das Dünnsäure produzierende Verfahren ökonomisch stark belastet.

Es bestand somit die Aufgabe, ein Verfahren zur Verfügung zu stellen, welches in einfacher Weise durchführbar ist und die obengenannten Nachteile der bekannten Verfahren nicht aufweist.

Diese Aufgabe wird dadurch gelöst, dass die anfallenden Metallsulfate und andere abfiltrierte Salze mit Ca-Verbindungen in Feststoffe überführt werden, die für verschiedene Zwecke einsetzbar sind.

Gegenstand der vorliegenden Erfindung ist somit ein Verfahren zur Aufbereitung metallsulfathaltiger Schwefelsäuren, sogenannter Dünnsäuren, durch Eindampfen, gegebenenfalls Ausschleusen eines Teils der Metallsulfate, Abtrennen einer wiederverwendbaren Schwefelsäure und Beseitigung der restlichen Metallsulfate, wobei die restlichen Metallsulfate, die ihnen anhaftende Säure und gegebenenfalls andere anfallende Salze mit CaO, Ca(OH)$_2$ und/oder CaCO$_3$ unter Bildung von Feststoffen, bestehend aus Gips und schwerlöslichen Metallverbindungen, umgesetzt werden.

Das erfindungsgemässe Verfahren vermeidet die Nachteile der obengenannten Verfahren. Die Dünnsäure wird nach einem beliebigen oder durch eine vorteilhafte Kombination mehrerer Verfahren auf 50 bis 70% H$_2$SO$_4$, vorzugsweise 62 bis 67% H$_2$SO$_4$ (in der feststofffreien Lösung) eingedampft. Durch Abkühlung auf 40 bis 70°C werden die Metallsulfate weitgehend auskristallisiert. Bei Al- und Mg-Gehalten über 0,3 Gew.% wird eine mehrstufige Rührkaskade mit 10 bis 40 h Verweilzeit für die Sulfatkristallisation bevorzugt. Anschliessend werden die Metallsulfate durch Filtrieren oder Zentrifugieren von der Säure getrennt und die Säure in den Prozess zurück- oder einer anderen Verwendung zugeführt. Die Sulfate, die noch 10 bis 45% Haftfeuchte in Form 50 bis 70%iger Schwefelsäure enthalten, werden mit so viel CaO, Ca(OH)$_2$ oder CaCO$_3$ umgesetzt, dass alle Sulfatgruppen in CaSO$_4 \cdot 2$ H$_2$O überführt werden. Diese Umsetzung kann in Rührgefässen in wässriger Suspension erfolgen. Bevorzugt wird die Umsetzung in diskontinuierlich oder kontinuierlich arbeitenden Mischern wie Schaufelmischern. Dabei werden die von der Säure abgetrennten Sulfate mit CaO, Ca(OH)$_2$ oder CaCO$_3$ und so viel Wasser versetzt, dass die Reaktion zügig abläuft. Die Reaktionswärme kann durch Wasserverdampfung abgeführt werden. Es werden rieselfähige, nicht staubende Reaktionsprodukte erhalten. Bei diesem bevorzugten Verfahren kann CaCO$_3$ nur insoweit eingesetzt werden, wie es für die Neutralisation der freien Schwefelsäure verbraucht wird. Vorzugsweise wird gelöschter Kalk (Ca[OH]$_2$) verwendet.

Gemäss dem oben angeführten Rechenbeispiel werden bei der Entsorgung der gleichen Dünnsäure aus der Produktion von 50 000 t/a TiO$_2$ bei dem erfindungsgemässen Verfahren 60 000 t/a H$_2$SO$_4$ als wiederverwendbare Säure gewonnen und unter Einsatz von 43 000 t/a Ca(OH)$_2$ nur 100 000 t/a Gips und 27 000 t/a Metallhydroxide erzeugt, wenn die von der Schwefelsäure abgetrennten Salze 25% ungebundene Schwefelsäure als Haftfeuchte enthalten.

Eine weitere bevorzugte Ausführung der Erfindung besteht darin, dass die abgetrennten Salze durch mechanische Nachentfeuchtung mit beispielsweise Bandpressfiltern von einem Teil der anhaftenden Säure befreit werden. Wird die anhaftende Säure dabei beispielsweise von 25 auf 18% H$_2$SO$_4$ reduziert, so erhöht sich die Produktion wiederverwendbarer Säure in obigem Beispiel auf 68 500 t/a H$_2$SO$_4$, während sich der Ca(OH)$_2$-Bedarf auf 37 000 t/a und der Zwangsanfall von Gips auf 86 000 t/a verringert.

Eine weitere bevorzugte Ausführung der Erfindung besteht darin, dass nach der Abtrennung der Metallsulfate von der Schwefelsäure die anhaftende Schwefelsäure mit Dünnsäure oder vorzugsweise Wasser weitgehend aus den Salzen verdrängt wird, ohne dass die Säure durch Wasser verdünnt oder durch wiederaufgelöste Salze verunreinigt wird. Wird gemäss dem obengenannten Beispiel 65%ige Säure so weit durch Wasser verdrängt, dass die Haftfeuchte im Durchschnitt noch 10% H$_2$SO$_4$ enthält, so erhöht sich die Ausbeute an wiederverwendbarer Säure auf 80 000 t/a H$_2$SO$_4$. Für die Umsetzung aller Sulfatgruppen zu Gips werden 22 000 t/a CaO benötigt; der Zwangsanfall beträgt 67 000 t/a Gips und 27 000 t/a Metallhydroxide. Bei dieser Ausführung kann die Umsetzung mit Ca(OH)$_2$ oder CaO erfolgen. CaO wird wegen der grösseren Reaktionswärme bevorzugt.

Eine bevorzugte Ausführung der Erfindung besteht darin, dass aus der Dünnsäure Grünsalz FeSO$_4$·7 H$_2$O, gegebenenfalls nach einer Voreindampfung auf 28–32% H$_2$SO$_4$, entsprechend den Verwendungsmöglichkeiten abgetrennt wird, wodurch sich der Kalkbedarf und der Anfall an Gips und Metallhydroxiden weiter verringert.

Eine weitere bevorzugte Ausführung der Erfindung besteht darin, dass ein Teil des Eisensulfats als FeSO$_4$·H$_2$O unmittelbar nach der Eindampfung der Dünnsäure auf 40–70% H$_2$SO$_4$ abgetrennt und in Dünnsäure gelöst wird oder dass ein Teil der nach Abkühlung auf 40–70°C von der 50–70%igen Säure abgetrennten Salze in der Dünnsäure gelöst wird, um zusätzliche Mengen Grünsalz abzutrennen.

Eine weitere vorteilhafte Ausführung der Erfindung besteht darin, dass die von den Salzen abgetrennte 50–70%ige Säure weiter bis auf maximal 96% H$_2$SO$_4$ eingedampft wird, dass die beim Abkühlen der eingedampften Säure kristallisierten Salze abgetrennt und zusammen mit den aus der 50–70%igen Säure abgetrennten Salzen mit Ca(OH)$_2$, CaO oder CaCO$_3$ umgesetzt werden.

Die bei der Umsetzung entstehenden Feststoffe haben eine schmutzig-graue Farbe. Unter Einwirkung von Luftsauerstoff wird das Eisen(II)-hydroxid zu Eisen(III)-hydroxid oder -oxidhydrat oxidiert.

Das danach hellbraune Feststoffgemisch eignet sich als Rohstoff in der Zementindustrie oder Baustoffindustrie sowie als Zuschlagstoff im Baugewerbe. Ebenso ist die Eignung zur Landverfüllung oder Deponierung wegen der geringen Wasserlöslichkeit der verschiedenen Inhaltsstoffe hervorragend.

Durch Kalzinieren bei 150–300°C kann aus dem Feststoffgemisch ein schnellabbindendes, hellbraunes Gips-Hydroxid-Gemisch erhalten werden. Durch Kalzinieren bei 950–1200°C erhält man ein Gemisch aus Estrichgips und braunen Metalloxiden.

Nachfolgend wird die Erfindung beispielhaft erläutert, ohne dass dies eine Einschränkung der Erfindung darstellen soll.

Beispiel 1

28,6 t/h Dünnsäure aus einer TiO$_2$-Produktion mit

| | |
|---|---|
| 28 % H$_2$SO$_4$ | 1,0 % TiOSO$_4$ |
| 7,6% FeSO$_4$ | 0,25% MnSO$_4$ |
| 2,1% Al$_2$(SO$_4$)$_3$ | 0,10% Cr$_2$(SO$_4$)$_3$ |

wurden in einer zweistufigen Vakuumkühl- und Kristallisationsanlage auf 7°C abgekühlt. Aus der dabei gebildeten Suspension wurden 1,8 t/h Grünsalz (1,6 t/h FeSO$_4$·7 H$_2$O mit 0,2 t/h MgSO$_4$·7 H$_2$O) durch Filtration abgetrennt.

26 t/h Filtrat + Waschwasser wurden mit 12,9 t/h 8% H$_2$SO$_4$ enthaltender Dünnsäure aus der TiO$_2$-Produktion gemischt und in eine Vorkonzentrierungsanlage eingespeist. Die in dieser Anlage im Kreislauf gepumpte Dünnsäure wurde in Röhrenwärmetauschern durch SO$_3$-Absorber-Kreislaufsäure von 70 auf 90°C aufgeheizt und in einem Venturiwäscher mit nachgeschaltetem Waschturm mit Luft auf 70°C abgekühlt. Dabei wurde die Luft (80 000 m³/h) mit Wasserdampf beladen. Aus der Dünnsäure wurden 10,7 t/h H$_2$O verdampft. Die auf 32% H$_2$SO$_4$ eingedampfte Dünnsäure wurde mit 90°C in eine 3-stufige Vakuumzwangsumlaufverdampferanlage eingespeist, in der die Eindampfung auf 67% H$_2$SO$_4$ (salzfrei) erfolgte.

Beispiel 2

Aus der nach Beispiel 1 erhaltenen Suspension wurden 5,1 t/h Filterkuchen (I) mit 3100 kg/h $MeSO_4$ und 1310 kg/h $H_2SO_4$ abgetrennt.

100 kg dieses Filterkuchens wurden mit 100 kg Wasser gemischt und in einem Rührbehälter mit einer Aufschlämmung von 71 kg $CaCO_3$ in 100 kg Wasser versetzt. Nach einstündigem Rühren wurde der Schlamm filtriert. Bei geringer Filterleistung wurde ein schmutzig-grauer Filterkuchen (II) mit 68% Feststoff erhalten, der sich an der Luft langsam braun färbte.

Beispiel 3

20 kg Filterkuchen (I) aus Beispiel 2 wurden in einem Schaufelmischer mit 10,5 kg trockenem gelöschten Kalk $Ca(OH)_2$ vermischt. Zu der krümeligen Mischung wurden 5 l Wasser zugesprüht. Die Mischung erhitzte sich so stark, dass Wasser verdampfte. Nach 10 min wurden 33 kg rieselfähigen, nicht staubenden schmutziggrauen Feststoffs ausgetragen. An der Luft ausgebreitet wurde er während 6 h durch Oxidation des $Fe(OH)_2$ zu FeOOH oder $Fe(OH)_3$ hellbraun.

Beispiel 4

20 kg Filterkuchen (I) wurden im Mischer mit 6 l Wasser angemaischt und mit 5,3 kg $CaCO_3$ versetzt. Nachdem die $CO_2$-Entwicklung aufgehört hatte, wurden 6,6 kg $Ca(OH)_2$ zugegeben. Das feuchte krümelige Reaktionsprodukt verhielt sich an der Luft wie dasjenige aus Beispiel 3.

Beispiel 5

Filterkuchen (I) aus Beispiel 2 wurde mit einem Pressbandfilter nachentfeuchtet. Der vom Filter abgenommene Kuchen (II) enthielt 18,3% $H_2SO_4$, entsprechend 28% Haftfeuchte.

20 kg dieses Filterkuchens (II) wurden im Mischer mit 6 l Wasser zu einer Suspension angemaischt und mit 10,6 kg $Ca(OH)_2$ vermischt. Die Masse reagierte ebenfalls unter Wasserdampfentwicklung. Nach 10 min wurden 35 kg Reaktionsprodukt ausgetragen, das an der Luft eine dunklere braune Farbe annahm als bei Beispiel 3.

100 g des oxidierten Reaktionsproduktes wurden 2 h lang mit 200 ml $H_2O$ gerührt und anschliessend filtriert. Das farblose Filtrat enthielt weniger als 0,01 mg/l Cr und V, je 0,02 mg/l Cu und Ni und 0,03 mg/l Fe.

Beispiel 6

Auf einem Vakuumbandfilter wurde ein Teilstrom der entsprechend Beispiel 1 gewonnenen Suspension filtriert und die Haftfeuchte (65%ige $H_2SO_4$) weitgehend mit Wasser aus dem Filterkuchen verdrängt. 20 kg des so erhaltenen Filterkuchens (III) enthielten 13,3 kg Metallsulfate, 2,1 kg $H_2SO_4$ und 4,5 kg $H_2O$. Dieser Filterkuchen (III) wurde im Schaufelmischer mit 8 l Wasser angemaischt und mit 6,7 kg gebrannten Kalkes (CaO) versetzt.

Die Mischung reagierte mit starker Dampfentwicklung. Es wurden 30 kg Reaktionsprodukt ausgetragen. Nach der Oxidation durch Luftsauerstoff hatte der Feststoff eine mittelbraune Farbe.

## Patentansprüche

1. Verfahren zur Aufbereitung metallsulfathaltiger Schwefelsäuren, sogenannter Dünnsäuren, durch Eindampfen, gegebenenfalls Ausschleusen eines Teils der Metallsulfate, Abtrennen einer wiederverwendbaren Schwefelsäure und Beseitigung der restlichen Metallsulfate, dadurch gekennzeichnet, dass die restlichen Metallsulfate, die ihnen anhaftende Säure und gegebenenfalls andere anfallende Salze mit CaO, $Ca(OH)_3$ und/oder $CaCO_3$ unter Bildung von Feststoffen, bestehend aus Gips und schwerlöslichen Metallverbindungen, umgesetzt werden.

2. Verfahren gemäss Anspruch 1, dadurch gekennzeichnet, dass die Umsetzung in Mischern unter dosierter Zugabe von Wasser und unter Bildung fester, rieselfähiger Reaktionsprodukte erfolgt.

3. Verfahren gemäss Anspruch 1, dadurch gekennzeichnet, dass die Umsetzung in einer wässrigen Aufschlämmung mit $Ca(OH)_2$ und/oder $CaCO_3$ erfolgt.

4. Verfahren gemäss einem der Ansprüche 1-3, dadurch gekennzeichnet, dass die Metallsulfate durch mechanische Nachentfeuchtung oder durch Verdrängung der Säure mit Wasser oder Dünnsäure von einem Teil der ihnen anhaftenden Säure befreit werden.

5. Verfahren gemäss einem der Ansprüche 1-4, dadurch gekennzeichnet, dass ein Teil des Metallsulfats nach einer Voreindampfung der Dünnsäure auf 28–32% $H_2SO_4$ als $FeSO_4 \cdot 7 H_2O$ kristallisiert und abgetrennt wird.

6. Verfahren gemäss Anspruch 5, dadurch gekennzeichnet, dass ein Teil der aus der 40–70%igen Schwefelsäure abgetrennten Sulfate vor der $FeSO_4 \cdot 7 H_2O$-Kristallisation in der Dünnsäure gelöst wird.

7. Verfahren gemäss einem der Ansprüche 1-6, dadurch gekennzeichnet, dass die Konzentration der abgetrennten Schwefelsäure 50–70% (feststofffrei) beträgt.

8. Verfahren gemäss Anspruch 7, dadurch gekennzeichnet, dass die Konzentration der abgetrennten Schwefelsäure durch weitere Eindampfung weiter bis maximal 96% erhöht wird und die nach Abkühlung der eingedampften Säure kristallisierten Metallsulfate abgetrennt werden.

9. Verfahren gemäss einem der Ansprüche 1-8, dadurch gekennzeichnet, dass die Feststoffe bei 150–300°C zur Verwendung als schnell abbindendes Gips-Hydroxid-Gemisch in der Zement- und Baustoffindustrie kalziniert werden.

10. Verfahren gemäss einem der Ansprüche 1 bis 8, dadurch gekennzeichnet, dass die Feststoffe bei 950 bis 1200°C zur Verwendung in der Zement- und Baustoffindustrie oder zur Landverfüllung und Bodenverbesserung kalziniert werden.

## Claims

1. A process for working up sulfuric acids containing metal sulfates, so-called thin acids, by concentration by evaporation, optionally removal of part of the metal sulfates, separation of a reuseable sulfuric acid and elimination of the remaining metal sulfates, characterized in that the remaining metal sulfates, the acid adhering to them and any other salts accumulating are reacted with CaO, $Ca(OH)_2$ and/or $CaCO_3$ with formation of solids consisting of gypsum and poorly soluble metal compounds.

2. A process as claimed in claim 1, characterized in that the reaction is carried out in mixers with measured addition of water and with formation of solid, free-flowing reaction products.

3. A process as claimed in claim 1, characterized in that the reaction is carried out in an aqueous suspension containing $Ca(OH)_2$ and/or $CaCO_3$.

4. A process as claimed in any of claims 1 to 3, characterized in that the metal sulfates are freed from part of the acid adhering to them by mechanical desiccation or by displacement of the acid with water or thin acid.

5. A process as claimed in any of claims 1 to 4, characterized in that, after pre-concentration of the thin acid by evaporation to 28 to 32% $H_2SO_4$, part of the metal sulfate is crystallized as $FeSO_4 \cdot 7 H_2O$ and separated off.

6. A process as claimed in claim 5, characterized in that, before crystallization of the $FeSO_4 \cdot 7 H_2O$, part of the sulfates separated off from the 40 to 70% sulfuric acid are dissolved in the thin acid.

7. A process as claimed in any of claims 1 to 6, characterized in that the concentration of the sulfuric acid separated off is 50 to 70% (solids-free).

8. A process as claimed in claim 7, characterized in that the concentration of the sulfuric acid separated off is further increased to at most 96% by further concentration by evaporation and the metal sulfates crystallized after cooling of the concentrated acid are separated off.

9. A process as claimed in any of claims 1 to 8, characterized in that the solids are calcined at 150 to 300°C for use as a quick-setting gypsum hydroxide mixture in the cement and building materials industry.

10. A process as claimed in any of claims 1 to 8, characterized in that the solids are calcined at 950 to 1200°C for use in the cement and building materials industry or for backfilling land and improving the mechanical properties of soils.

## Revendications

1. Procédé de traitement d'acides sulfuriques contenant des sulfates métalliques, appelés acides dilués, par concentration par évaporation, le cas échéant décharge d'une partie des sulfates métalliques, séparation d'un acide sulfurique réutilisable et élimination des sulfates métalliques restants, caractérisé en ce que les sulfates métalliques restants, l'acide qu'ils retiennent et, le cas échéant, d'autres sels présents sont amenés à réagir avec CaO, $Ca(OH)_2$ et/ou $CaCO_3$ avec formation de matières solides constituées de gypse et de composés métalliques difficilement solubles.

2. Procédé suivant la revendication 1, caractérisé en ce que la réaction est conduite dans des mélangeurs avec addition dosée d'eau et formation de produits réactionnels solides pouvant s'écouler.

3. Procédé suivant la revendication 1, caractérisé en ce qu'on conduit la réaction dans une suspension aqueuse additionnée de $Ca(OH)_2$ et/ou de $CaCO_3$.

4. Procédé suivant les revendications 1 à 3, caractérisé en ce que les sulfates métalliques sont débarrassés d'une partie de l'acide qui y adhère par une redéshumidification mécanique ou par déplacement de l'acide avec de l'eau ou de l'acide dilué.

5. Procédé suivant les revendications 1 à 4, caractérisé en ce qu'une partie du sulfate métallique est cristallisée sous la forme de $FeSO_4 \cdot 7 H_2O$ et séparée, après concentration préalable par évaporation de l'acide dilué à 28–32% de $H_2SO_4$.

6. Procédé suivant la revendication 5, caractérisé en ce qu'une partie des sulfates séparés de l'acide sulfurique à 40–70% est dissoute dans l'acide dilué avant la cristallisation du $FeSO_4 \cdot 7 H_2O$.

7. Procédé suivant l'une des revendications 1 à 6, caractérisé en ce que la concentration de l'acide sulfurique séparé s'élève à 50–70% (absence de matières solides).

8. Procédé suivant la revendication 7, caractérisé en ce que la concentration de l'acide sulfurique séparé est encore élevée jusqu'à un maximum de 96% par une nouvelle concentration par évaporation et les sulfates métalliques cristallisés après refroidissement de l'acide concentré par évaporation sont séparés.

9. Procédé suivant l'une des revendications 1 à 8, caractérisé en ce que les matières solides sont calcinées à une température de 150 à 300°C en vue de leur utilisation comme mélange gypse-hydroxyde à prise rapide dans l'industrie des ciments et l'industrie des matériaux de construction.

10. Procédé suivant l'une des revendications 1 à 8, caractérisé en ce que les matières solides sont calcinées à une température de 950 à 1200°C en vue de leur utilisation dans l'industrie des ciments et dans l'industrie des matériaux de construction ou pour le remblayage de terrains et pour l'amendement du sol.